# EUROPEAN PATENT APPLICATION

(11) **EP 3 153 828 A2**
(43) Date of publication of application: **12.04.2017**
(21) Application number: 15799488.0
(22) Date of filing: 09.07.2015
(51) Int. Cl.: G01F 11/04, F04B 9/103

(54) **POSITIVE DISPLACEMENT HYDRAULIC DEVICE FOR PUMPING AND/OR DOSING LIQUIDS**

(30) Priority: 30.05.2014 RU 2014122055
(71) Applicant: Obschestvo S Ogranichennoy Otvetstvennostyu "Farmasapfir", Moscow 121354 (RU)
(72) Inventor: SAVENKOV, Vitalij Alekseevich, Moscow 121351 (RU)
(74) Representative: Chimini, Francesco
(86) International application number: PCT/RU2015/000433
(87) International publication number: WO 2015/183139

(57) **Abstract**

The invention relates to devices for transferring or dispensing liquids. Hydraulic positive-displacement device for pumping and / or dispensing fluids, comprising of a working chamber in which the working body is placed, is characterized by the working body made of a composite of at least two parts the first of which - the outside is made of sapphire, and its outer surface is congruent to the interior surface of the working chamber, the second item is placed in the inner cavity of the first part and configured to transmit the translational motion of the working body. The invention reduces the surface roughness of the working body, simplifying the process of replacing individual parts of the unit and extends the range of geometrical sizes of devices that can be manufactured.

## Description

### Technical Field

The invention relates to the field of mechanics, namely, to the positive displacement liquid devices. The invention can be used in all areas of technology, including as component parts of the pump and/or metering devices (metering pumps), in particular in pharmaceutical, food, chemical, perfumery, cosmetics, machine-building and other industries.

### Background

Currently, most metering pumps for pharmaceutical and food industries include plunger pairs of various metal and ceramic materials (see, eg, US 4,273,263 A, 16.06.1981; DE 2723320 C2, 04.11.1982; FR 2797046 A1, 02.02.2001).

However, the metering pumps with metal and ceramic plunger pairs may be subject to wearing of rubbing parts. As the result of contiguous parts friction the minute particles of the material are formed and they contaminate the metering liquids, which is particularly undesirable in the pharmaceutical industry. In addition, the result of rubbing parts wearing changes the metering volume that is also unacceptable for high-precision metering. In addition, the metering pumps in the pharmaceutical and food industry have to withstand the prolonged exposure of corrosive operation factors, in particular, sterilization process.

Significantly greater wear resistance can be obtained in the manufacture of plunger pair parts of crystals, in particular, crystals based on the aluminum oxide α-modification (α-Al2O3, the same corundum).

Studies have shown that, for example, leucosapphire (which is a kind of α-Al2O3), oriented in the direction of crystallographic axis [0001] has a wear resistance of 10 times greater vs. chromium coating and 5 times greater vs. alumina ceramics.

Furthermore, leucosapphire is transparent over a wide wavelength range; it has weak light scattering and high optical homogeneity, high radiation resistance, low internal stress, and high resistance to aggressive media.

Leucosapphire transparency is the additional advantage making it possible to visually check the presence/absence of bubbles in the metering pump, which is important for high precision metering.

In the prior art the positive displacement hydraulic unit for liquid pumping and/or metering is known, comprising a working chamber where the working body is placed (RU 2240733 C1, 27.11.2004). This unit is the closest analogue of the subject invention. This solution disadvantages are in high complexity of individual components replacement, high roughness of working surfaces and a poor product range limited by the leucosapphire crystal geometrical dimensions, which limits the scope of the unit application. High surface roughness of the rubbing parts leads to increased frictional force between them, which in its turn leads to increased friction parts wearing and, respectively, a negative effect on the plunger pairs and based on them metering pumps stability and durability. The complexity of individual parts replacement leads to the equipment long downtime.

The problem to be solved by the proposed invention is to eliminate the disadvantages of the closest analogous solution.

This problem solution decreases the roughness of working body surface, simplifies unit individual parts replacement, as well as expands the range of device geometric dimensions, which can be made.

### Summary

Hydraulic positive-displacement unit for liquid pumping and/or metering, comprising a working chamber, in which the working body is placed, has been developed to achieve the above technical result and solve this problem, and according to the invention the working body is made of the composite of at least two parts, the first of which ('glass') is external and is made of leucosapphire, and its outer surface is congruent to the interior surface of the working chamber, the second part is placed in the inner cavity of the first part and is configured to transmit the translational motion to the working body.

The working body may be a plunger.

The working body may be a piston.

The device additionally comprises a working body in the form of slide.

The first part may be configured to be removable from the second part

The first part in the longitudinal cross section may be U-shaped.

The inner surface of the first part can be congruent to the outer surface of the second part.

The first part may be pressed into the second one.

The outer surface of the first part may be machined to the surface roughness of 5 Å.

The inner surface of the working chamber may be made of leucosapphire.

The surface of the working chamber can be machined to the surface roughness of 5 Å.

The second part may be made of metal.

### Drawings

FIG. 1 - Section of the working body with the leucosapphire "glass";
FIG. 2 - View of the hydraulic device from the slide;
FIG. 3 - Section of the hydraulic unit assembly.

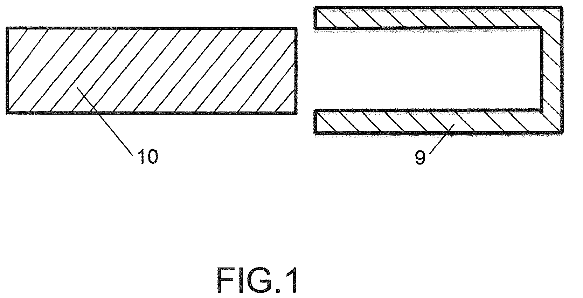

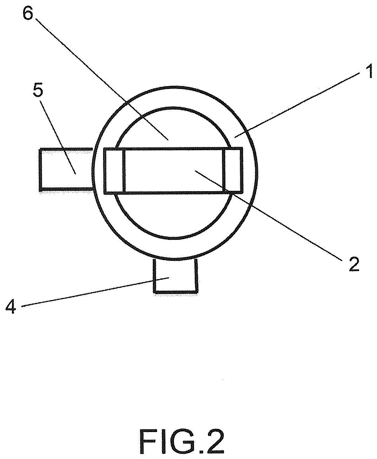

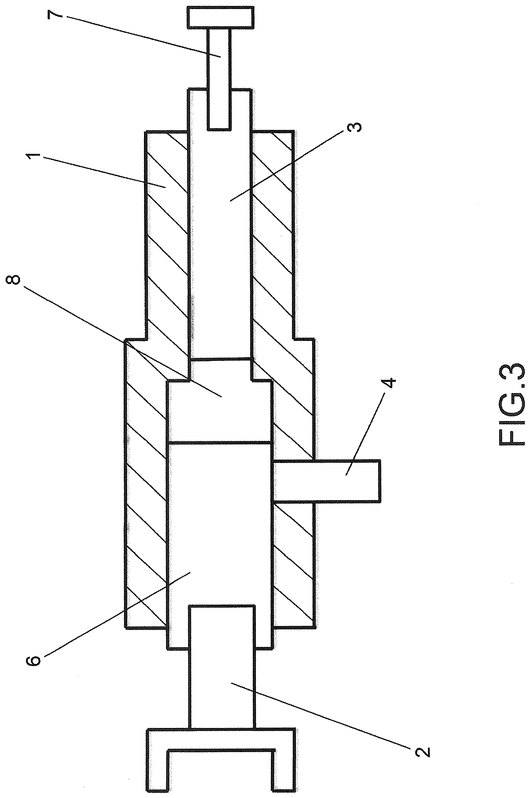

FIG. 1 shows the working body - plunger, piston or slide consisting of the first part (9) - leucosapphire "glass" and the second part (10). FIG. 2, 3 show the working body of the hydraulic unit assembly, which comprises the following components: housing (1), 'fork' (2); plunger or piston (3), discharge channel (4), supply channel (5), slide (6), rod (7), working chamber of the hydraulic unit (8).

### Detailed description of invention

The main idea and importance of the technical solution is fast, not time-consuming, cheap replacement of the first leucosapphire part, in the event of wearing, damage, failure with the new leucosapphire part. In similar pistons and plungers, the plunger itself consists of a single integrated structure in the case of wearing or damage, the entire pump or metering unit is fully replaceable. It is very expensive, time consuming and not cost-effective.

Hydraulic positive-displacement unit for liquid pumping and/or metering, comprising a working chamber in which the working body is placed, is characterized by working body formation as a composite of at least two parts, the first of which ("glass') is external and is made of leucosapphire, and its outer surface is congruent to the interior surface of the working chamber, the second part is placed in the inner cavity of the first part and is configured to transmit the translational motion to the working body.

The working body is a plunger.

The working body is a piston.

The unit additionally comprises a working body in the form of slide, it is a composite of at least two parts, the first of which (the "glass") is the outer and is made of leucosapphire, and its outer surface is congruent to the interior surface of the working chamber, the second part is placed in the inner cavity of the first part and is configured to transmit rotary motion to the working body.

The first part is removable from the second part.

The first part in the longitudinal section is U-shaped.

The inner surface of the first part is congruent to the outer surface of the second part.

The first part is pressed to the second one.

The outer surface of the first part is machined to the surface roughness of 5 Å.

The inner surface of the working chamber is made of leucosapphire.

The surface of the working chamber is machined to the surface roughness of 5 Å.

The second part is made of metal.

The proposed unit is made as follows:
Primarily the leucosapphire 'glass' is made as the first part, a basic kit for the manufacture and assembly of the sapphire plungers and (or) pistons in pumping and metering devices.

The blanks with margins of 0.3 mm to 2.5 mm for finishing and superfinishing precision mechanical and chemical machining are made of artificial leucosapphire single crystal by Stepanov method in orientation along the C 0001 axis. After passing the leucosapphire single crystal growth stage, the grown single crystal is discharged from the unit and cooled to room temperature of 18-22°C. After the grown leucosapphire blanks are cooled, they are washed with tap water at room temperature, put in the drying box and dried at a temperature of 350-450°C.

Next comes the technical operation of cutting sapphire blanks to the required linear dimensions, with tolerances of 0.3-2.5 mm for further machining. Sapphire blank cutting is made by diamond rings on a special cutting machine.

The basic assembly units of sapphire pump and metering units exist in many variants and can be, for example the following:
A) Plunger with sapphire 'glass'
B) Piston with sapphire 'glass'
C) Slide with sapphire 'glass'.

In some brands, models and modifications other than the plunger and (or) of the piston, so-called slide, a kind of 'crane' may be present, the function of which is to open and allow the particular liquid dose, and by rotating by a certain degree around its axis, the slide closes the inlet channel and at the same time opens the release channel to allow some liquid dose flow out. The slide works using rotational movements.

Next, the blanks are machined on precision machinery using mechanical and chemical - mechanical means. Each individual blank is machined according to the technology and design - technical documentation set in the terms of the performance specification (PS) documentation and in accordance with all the requirements of the European, international or Russian GOST, OST, TU and passports for metering and pumping devices.

Production of sapphire 'cup' in the application assembly technology sapphire piston and plunger slide occurs by mechanical and chemical-mechanical process on the precision CNC centerless cylindrical grinding machine tools or high-precision CNC machine tools Circular pivot. Such machine tools are the so-called superfinishing precision CNC machines. The processing of workpieces is made by sapphire with diamond tools, diamond wheels with different size of diamond grains (fractions). The process of diamond grinding of the working friction surfaces of the outer diameter sapphire blanks begins at the first stage of machining a rough grinding, diamond wheels with a large fraction of the diamond grains. Further diamond circles are replaced with smaller fractions of diamond grains, there is a so-called secondary grinding. Then there is the fine grinding processing of diamond grains, the so-called fine grinding. At the final stage of grinding diamond, grinding wheels with the smallest fraction of the diamond grains are used. This is called the fine and super fine mechanical grinding. Mechanical polishing of working surfaces rubbing sapphire 'glasses' for use as components, the assembly of sapphire plungers, pistons and dampers completed when the surface roughness of the working part is not more than 100 nm.

In the future, the process of machining passes in chemical and mechanical. At this stage, various special chemical liquid and form a suspension for superfinishing machining, polishing friction (working) surface of sapphire 'cups' for the plungers and pistons are applied. The treatment process takes place under the control of electronics in the high-precision machine tools. Polishing process ends with the receipt of polishing the surface roughness of the work of the sapphire, 'glasses' at 5 Å.

The inner surface of the sapphire glass does not need to be polished. The process of internal grinding diameter sapphire glass takes place on the high-precision centerless inner polishing CNC machines to achieve the level of roughness of the broken surface of not more than 400 nm.

With mechanical and chemical-mechanical treatment in the manufacture of sapphire, 'glasses' are kept on all access processing geometry specified in the design documentation. As an example, the following tolerances apply for roundness 0.005 mm, and linearity from 0.003 to 0.005 mm.

When preparing a sapphire 'cup' to the final stage of assembly in a single sapphire plunger, piston or vane is necessary to make preliminary calculations for the required gap between the inner diameter sapphire 'cup' and an outer diameter stainless steel gate, which will be pressed Sapphire 'glass'. The calculation of the gap as follows: Stainless steel AISI 316L or 316, an outer diameter of 20 mm rod when heated to 4000C expands: diameter of 20 mm, heated to 4000C x 17 x 10-6 mm = 0.136 mm. Leucosapphire expanded diameter of 20 mm, heated to 4000C x 7 x 10-6 mm = 0.056 mm. Thus, when heated to 400 °C with diameters and stainless steel AISI 316L or 316 will be: 0.136 mm - 0.056 mm = 0.08 mm. For reliable press-fit tolerance the sufficient clearance is of 0.02 mm.

The assembly unit of sapphire of pumping and metering devices is mounted in a single structure of the pump or metering device in the following way: using hot or cold pressing of separate assembly units Sapphire 'glass' and a metal gate into a single structure of the sapphire plunger, piston or vane. Further sapphire plunger or piston damper is inserted into the housing of the pump or dosing device.

Next there is a complete finishing assembly of the individual assembly units - assembly sapphire pumping or dispensing device, after checking the quality of DTC products.

The apparatus according to FIG. 2 and 3 operates as follows.

Elements of the hydraulic device a plunger or piston (3), gate is assembled from two parts: the first part is made of sapphire having a surface roughness of 5 Å, and the second - from metal, which is pressed into the stem (in the case of a plunger or piston) or the plug (if gate) is placed inside the body (1) forming a working chamber (9), the inner surface of which is made of sapphire having a surface roughness of 5 Å. Deferent (4) and inlet (5) are pressed into the channel body (1), wherein the diameters of the gate (6) or the plunger piston (3) to ensure sealing the inner diameter of the housing (1). The assembled device secured to a hydraulic line by means of dosing latch (not shown), 'fork' (2) and the rod (7) is connected to the actuator for dispensing machine. For dosing a liquid medium supplied through a feed passage (5) for filling the chamber (8) of the housing (1) of the device. After filling chamber (8), gate (6) is rotated with the 'fork' (2), wherein the supply (5) duct is closed and the outlet (4) channel opens, due to the fact that the damper (6) has a groove allowing open or close the outlet (4) or a lead (5) when rotating channels. The plunger or piston (3) with the stem (7) pushes the liquid medium through the outlet (4) channel, which fills corresponding container weighed.

The surface roughness of 5 Å of the leucosapphire 'cup' plunger or piston damper including leucosapphire surface of the working chamber the enclosure avoids dispensing liquid chemical interaction with the internal elements of a pump dispenser, which provides a liquid dispensing chemical purity. In addition, the surface roughness of 5 Å, the device of the above elements provides a low coefficient of friction, ensuring high precision dosing and device lifetime.

When replacing a dosing fluid to another requires sterilization. The surface roughness provides a minimum friction coefficient and makes it easy to disassemble the individual elements (vane, piston, the piston) of the hydraulic device.

Thus, the invention provides a hydraulic device which allows excluding interaction with elements of fluid dispensing device and improve the accuracy of dosing device lifetime, reduce the assembly time/disassembly of the pump when it is sterilized.

The invention has been disclosed above with reference to a specific embodiment thereof. For specialists may be evident, and other embodiments of the invention that do not alter its essence, as it is disclosed herein. Accordingly, the invention should be considered limited in scope only by the following claims.

## Claims

1. Hydraulic positive-displacement device for pumping and / or dispensing fluids, comprising a working chamber in which the working body is placed, is **characterized by** the working body made of a composite of at least two parts the first of which - the outside is made of sapphire, and its outer surface is congruent to the interior surface of the working chamber, the second item is placed in the inner cavity of the first part and configured to transmit the translational motion of the working body.

2. Device according to claim 1, is **characterized in that** the operating element is a plunger.

3. Device according to claim 1, is **characterized in that** the actuator is a piston.

4. Device of claim 1, is **characterized in that** the first part is formed detachably from the second part.

5. Device of claim 1, is **characterized in that** the first part has a longitudinal sectional U-shaped.

6. Device of claim 1, is **characterized in that** the inner surface of the first member outer surface is congruent to the second member.

7. Device of claim 1, is **characterized in that** the first part is pressed onto the second one.

8. Device of claim 1, is **characterized in that** the outer surface of the first part machined to the roughness of 5 angstroms.

9. Device of claim 1, is **characterized in that** the inner surface of the working chamber is made of sapphire.

10. Device of claim 9, is **characterized in that** the working chamber surface roughened 5 Angstroms.

11. Device of claim 1, is **characterized in that** the second part is made of metal.

12. Device of claim 1, is **characterized in that** the actuator further comprises a gate formed from a composite of at least two parts of which the first - exterior is made of sapphire, and its outer surface is congruent to the internal the surface of the working chamber, the second item is placed in the inner cavity first portion and arranged to transmit rotary motion dampers.
